# EUROPÄISCHE PATENTSCHRIFT

(11) **EP 3 844 052 B1**
(45) Veröffentlichungstag und Bekanntmachung des Hinweises auf die Patenterteilung: **03.08.2022**
(21) Anmeldenummer: 19758418.8
(22) Anmeldetag: 27.08.2019
(51) Int. Cl.: B62D 25/00, B62D 29/00, B29C 44/18, B29L 31/30

(54) **SYSTEM ZU DÄMMUNG EINES STRUKTURELEMENTES**
SYSTEM FOR INSULATION OF A STRUCTURAL ELEMENT
SYSTÈME D'ISOLATION D'UN ÉLÉMENT STRUCTURAL

(30) Priorität: 31.08.2018 EP 18192068
(43) Veröffentlichungstag der Anmeldung: 07.07.2021
(73) Patentinhaber: Sika Technology AG, 6340 Baar (CH)
(72) Erfinder: LINDGREN, Henrik, 7181 Feluy (BE); SAINT MEDAR, Gino, 1180 Uccle (BE); HENRION, Didier, 1800 Vilvoorde (BE)
(74) Vertreter: Sika Patent Attorneys
(86) Internationale Anmeldenummer: PCT/EP2019/072886
(87) Internationale Veröffentlichungsnummer: WO 2020/043740

(56) Entgegenhaltungen:
- EP-A1- 1 273 480
- EP-A1- 3 281 970
- EP-B1- 1 273 480
- WO-A1-2014/095620
- WO-A1-2017/182606
- GB-A- 2 463 858
- US-A1- 2009 223 739

## Beschreibung

Die Erfindung betrifft ein System zur Dämmung eines Strukturelementes in einem Kraftfahrzeug. Sie betrifft des Weiteren ein Verfahren zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

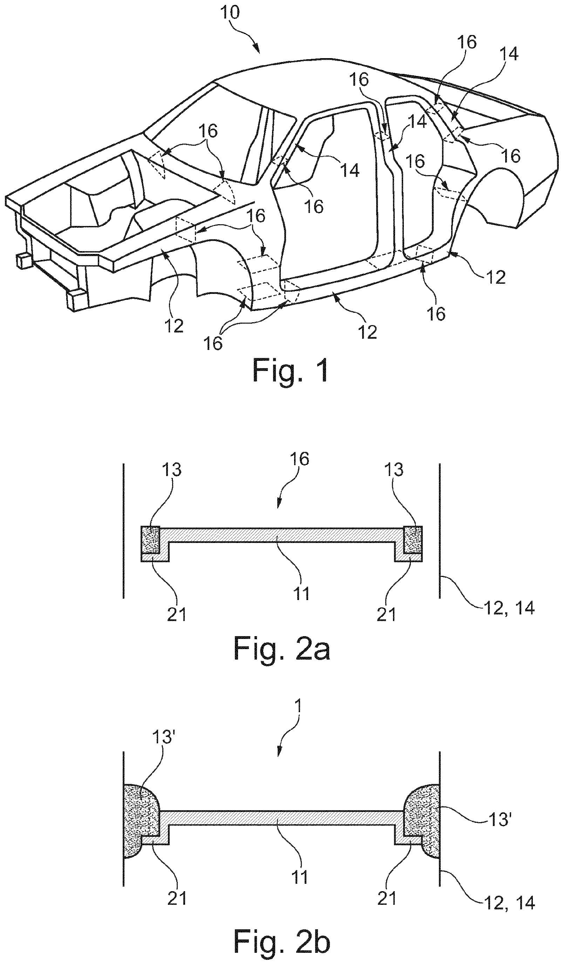

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a eine Vorrichtung 16 vor einer Expansion eines Klebstoffes 13. Fig. 2b zeigt dieselbe Vorrichtung 16 als Bestandteil des Systems 1, jedoch nach einer Expansion des Klebstoffes 13, also mit dem expandierten Klebstoff 13'.

Die Vorrichtung 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Die Vorrichtung 16 umfasst einen Träger 11, welcher einen Randbereich 21 hat. Der Klebstoff 13 ist dabei im Wesentlichen auf diesem Randbereich 21 des Trägers 11 angeordnet.

Vor der Expansion des Klebstoffes 13 besteht zwischen der Vorrichtung 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird der Klebstoff13 üblicherweise durch eine Wärmeeinwirkung expandiert, wobei der expandierte Klebstoff 13' dadurch den Spalt zwischen der Vorrichtung 16 und dem Strukturelement 12, 14 schliesst. Zudem wird durch die Expansion des Klebstoffes 13 auch zugleich eine Fixierung der Vorrichtung 16' im Strukturelement 12, 14 erreicht. Eine derart im Strukturelement 12, 14 befestigte Vorrichtung 16' verstärkt einerseits das Strukturelement 12, 14 und verschliesst andererseits den Hohlraum im Strukturelement 12, 14.

Nachteilig an den bisher bekannten Abdichtungs- und/oder Verstärkungselementen ist es, dass in den meisten Fällen für jede Karosserieform und für jeden Hohlraum einer Karosserie ein individuell angepasstes Element hergestellt werden muss. Dies führt zu hohen Entwicklungs- und Herstellungskosten, und ist insbesondere bei kleineren Fahrzeugserien nachteilhaft.

Weiterhin haben die bekannten Abdichtungs- und/oder Verstärkungselemente den Nachteil, dass sie schwer zugängliche Bereiche in komplexen Hohlräumen, oftmals nur ungenügend abdichten bzw. verstärken können. Ein derartiges System zu Dämmung von Strukturelementen in einem Kraftfahrzeug ist aus der WO 2917/182606 bekannt.

Es ist daher eine Aufgabe der vorliegenden Erfindung, ein verbessertes System zur Dämmung eines Strukturelementes in einem Kraftfahrzeug zur Verfügung zu stellen, welches die Nachteile des Standes der Technik vermeidet. Das System soll insbesondere wirtschaftliche Vorteile bei kleineren Stückzahlen mit sich bringen und insgesamt einen Entwicklungs- und Herstellungsaufwand reduzieren. Weiterhin soll eine bessere Ausfüllung von schwer zugänglichen Abschnitten von Hohlräumen gewährleistet werden. Diese Aufgabe wird gelöst durch ein System zur Dämmung eines Strukturelementes in einem Kraftfahrzeug, das System umfassend: ein Strukturelement mit einem ersten Bestandteil und einem zweiten Bestandteil, wobei die Bestandteile an einer ersten Fügestelle und an einer zweiten Fügestelle zusammengefügt sind, und wobei das Strukturelement einen Hohlraum bildet; eine Vorrichtung mit einem Träger und einem ersten expandierbaren Klebstoff, wobei der Träger durch ein Befestigungselement am ersten Bestandteil des Strukturelementes angeordnet ist; und ein zweiter expandierbarer Klebstoff, welcher auf dem zweiten Bestandteil des Strukturelementes angeordnet ist; wobei der erste expandierbare Klebstoff und der zweite expandierbare Klebstoff in einem nicht expandierten Zustand sind und derart ausgebildet und angeordnet sind, dass die Vorrichtung und der zweite expandierbare Klebstoff nach einer Expansion einen Querschnitt des Strukturelementes im Wesentlichen vollständig ausfüllen.

Diese Lösung hat zunächst den Vorteil, dass durch ein solches System mit einer einzigen standardisierten Vorrichtung verschiedene Strukturelemente gedämmt werden können. Dabei füllt die Vorrichtung mit dem ersten expandierbaren Klebstoff insbesondere einen Grossteil des Hohlraums im Strukturelement aus. Der zweite expandierbare Klebstoff wird insbesondere in Bereichen des Hohlraumes eingesetzt, welche mit der Vorrichtung schwer zugänglich und somit schwer auszufüllen sind. Da der zweite expandierbare Klebstoff individuell und direkt auf das Strukturelement appliziert wird, kann eine Menge und eine Gestalt des zweiten expandierbaren Klebstoffes individuell an das jeweilige Strukturelement angepasst werden. Somit müssen für verschiedene Strukturelemente bzw. für verschiedene Hohlräume des Strukturelementes keine individuellen Vorrichtungen produziert werden, sondern es kann mit einer standardisierten Vorrichtung bzw. mit einigen wenigen standardisierten Vorrichtungen ein grosses Spektrum an verschiedenen Strukturelementen abgedeckt werden im Zusammenspiel mit dem zweiten expandierbaren Klebstoff.

Ein Kerngedanke der vorliegenden Erfindung besteht darin, dass zunächst eine Vorrichtung zur Verfügung gestellt wird, welche zur Dämmung eines standardisierten Hohlraums von Strukturelementen eingesetzt werden kann. Dieser Vorrichtung wird nun ein zweiter expandierbarer Klebstoff hinzugefügt, welcher je nach Bedarf für einen konkreten (unter Umständen irregulär geformten) Hohlraum eines Strukturelementes verwendet werden kann. Somit kann die Vorrichtung in hoher Stückzahl hergestellt werden, und der zweite expandierbare Klebstoff kann mit günstigen Herstellungs- und Applikationsverfahren (insbesondere durch Pumpen oder Extrusion) in das Strukturelement eingebracht werden. Dadurch können tiefere Gesamtkosten erreicht werden, als wenn für jeden Hohlraum eine individuell angefertigte Vorrichtung hergestellt werden müsste. Zudem kann durch die variable Anwendung des zweiten expandierbaren Klebstoffes eine bessere Ausfüllung von schwer zugänglichen Bereichen der Hohlräume erreicht werden.

Die Bezeichnung "Dämmung" bzw. "gedämmt" umfasst im Zusammenhang mit dieser Erfindung Elemente bzw. Funktionen bzw. Strukturen bzw. Verfahrensschritte zur Abschottung und/oder Verschliessung und/oder Verstärkung und/oder Dämpfung und/oder Dämmung eines Strukturelementes. Diese verschiedenen Eigenschaften einer solchen Dämmung können dabei einzeln oder aber in Kombination miteinander auftreten.

Das Strukturelement umfasst zumindest einen ersten Bestanteil und einen zweiten Bestandteil, welche an einer ersten Fügestelle und an einer zweiten Fügestelle zusammengefügt sind und so einen Hohlraum bilden. Dabei können der erste und der zweite Bestandteil des Strukturelementes jeweils aus einem Element oder aber aus mehreren Elementen bestehen. Daher kann das Strukturelement auch mehr als zwei Fügestellen aufweisen.

In einer beispielhaften Ausführungsform umfasst das System mehrere Vorrichtungen mit einem Träger und einem ersten expandierbaren Klebstoff. Beispielsweise umfasst das System zwei Vorrichtung, drei Vorrichtungen, vier Vorrichtungen, fünf Vorrichtungen, mehr als zwei Vorrichtungen, mehr als drei Vorrichtungen, mehr als vier Vorrichtungen, oder mehr als fünf Vorrichtungen.

Dabei können jeweils sowohl die Gestalt sowie auch die Materialien dieser mehreren Vorrichtungen gleich oder unterschiedlich sein.

Beispielsweise können also der Träger einer ersten Vorrichtung und der Träger einer zweiten Vorrichtung eine gleiche oder eine unterschiedliche Gestalt aufweisen, und das erste expandierbare Material der ersten Vorrichtung und das erste expandierbare Material der zweiten Vorrichtung können beispielsweise gleiche oder unterschiedliche Expansionsraten oder Zusammensetzungen oder E-Module in aktiviertem Zustand aufweisen.

In einer beispielhaften Ausführungsform hat die Vorrichtung eine kompakte Form.

In einer beispielhaften Ausführungsform ist die Vorrichtung im Wesentlichen quaderförmig oder zylindrisch oder stumpfkegelförmig oder kegelförmig oder rotationskegelförmig.

Das Ausbilden einer kompakten Vorrichtung hat den Vorteil, dass dadurch die Vorrichtung robust in einer Anwendung und effizient stapelbar ist. Eine solche Form der Vorrichtung ist zudem vorteilhaft, um einen Hauptbereich des Hohlraums des Strukturelementes gleichförmig auszufüllen.

In einer beispielhaften Ausführungsform haben der Träger und der erste expandierbare Klebstoff auf einer gesamten Grundfläche der Vorrichtung zusammen eine Dicke von mindestens 3 mm oder mindestens 4 mm oder mindestens 5 mm oder mindestens 10 mm.

Dies hat wiederum den Vorteil, dass eine kompakte Form der Vorrichtung robuster, besser stapel- und transportierbar und besser geeignet zur Ausschäumung von Hauptbereichen der Hohlräume geeignet ist.

In einer beispielhaften Ausführungsform bildet der erste expandierbare Klebstoff ein einziges zusammenhängendes Element. In einer alternativen Ausführungsform bilden mehrere nicht zusammenhängende erste expandierbare Klebstoffe mehrere nicht zusammenhängende Elemente.

In einer beispielhaften Ausführungsform hat der erste expandierbare Klebstoff eine Expansionsrate von 1000 bis 3000%. In einer beispielhaften Weiterbildung hat der erste expandierbare Klebstoff eine Expansionsrate von 1000 und 2700% oder zwischen 1500 und 2500%.

Ein beispielhaftes Material mit einer solchen Expansionsrate ist unter dem Handelsnamen SikaBaffle^{®} 455 erhältlich.

In einer alternativen Ausführungsform hat der erste expandierbare Klebstoff eine Expansionsrate von 50 bis 500%. In einer beispielhaften Weiterbildung hat der erste expandierbare Klebstoff eine Expansionsrate von 70 und 400% bzw. zwischen 100 und 300%.

Ein beispielhaftes Material mit einer solchen Expansionsrate ist unter dem Handelsnamen SikaReinforcer^{®} 940 erhältlich.

In einer beispielhaften Ausführungsform sind der Träger und das Befestigungselement einstückig ausgebildet.

In einer weiteren beispielhaften Ausführungsform sind der Träger und das Befestigungselement aus demselben Material ausgebildet.

In einer beispielhaften Ausführungsform ist der erste Klebstoff durch ein Spritzgussverfahren auf dem Träger angeordnet.

In einer beispielhaften Ausführungsform ist der Träger durch ein Spritzgussverfahren hergestellt.

In einer beispielhaften Ausführungsform sind der Träger und der erste Klebstoff durch ein Zweikomponenten-Spritzgussverfahren hergestellt.

In einer beispielhaften Ausführungsform umfasst der Träger einen Kunststoff, insbesondere Polyamid.

In einer beispielhaften Ausführungsform umfasst der Träger einen faserverstärkten Kunststoff, insbesondere einen glasfaserverstärkten oder karbonfaserverstärkten Kunststoff.

Der Träger kann grundsätzlich aus verschiedenen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann der Träger einen beliebigen Aufbau und eine beliebige Struktur aufweisen. Er kann beispielsweise massiv, hohl, oder geschäumt sein oder eine gitterartige Struktur aufweisen. Die Oberfläche des Trägers kann typischerweise glatt, rau oder strukturiert sein.

In einer beispielhaften Ausführungsform hat der zweite expandierbare Klebstoff eine Expansionsrate von zumindest 200% oder von zumindest 300% oder von zumindest 400% oder von zumindest 500% oder von zumindest 800%.

Ein solcher expandierbarer und pumpbarer Klebstoff ist beispielhaft in der Europäischen Patentanmeldung EP 3 281 970 A1 beschrieben.

Ein Beispiel für einen solchen expandierbaren pumpbaren Klebstoff ist ein unter dem Handelsnamen Sikaseal^{®} erhältlicher Klebstoff.

Ein Beispiel für einen zweiten expandierbaren Klebstoff, welcher extrudierbar ist, ist unter dem Namen SikaBaffle^{®} 455 erhältlich.

In einer beispielhaften Ausführungsform ist der zweite expandierbare Klebstoff in Form einer Raupe oder mehrerer Raupen auf dem zweiten Bestandteil des Strukturelementes angeordnet.

In einer beispielhaften Ausführungsform ist der zweite expandierbare Klebstoff durch einen Roboter auf dem zweiten Bestandteil des Strukturelementes angeordnet.

In einer beispielhaften Ausführungsform hat die zumindest eine Raupe einen Durchmesser von 2 bis 20 mm oder von 4 bis 18 mm oder von 6 bis 16 mm.

In einer beispielhaften Ausführungsform hat die zumindest eine Raupe eine Länge von zumindest 10 mm oder von zumindest 20 mm oder von zumindest 30 mm oder von zumindest 50 mm oder von zumindest 100 mm.

In einer beispielhaften Ausführungsform ist der zweite expandierbare Klebstoff an der ersten Fügestelle und an der zweiten Fügestelle mit dem Strukturelement in Kontakt.

In einer beispielhaften Ausführungsform berührt der zweite expandierbare Klebstoff im Bereich der ersten und der zweiten Fügestelle jeweils sowohl den ersten Bestandteil des Strukturelementes als auch den zweiten Bestandteil des Strukturelementes.

In einer beispielhaften Ausführungsform hat der zweite expandierbare Klebstoff jeweils ausgehend von den Fügestellen eine Ausdehnung entlang des zweiten Bestandteils des Strukturelementes von zumindest 10 mm oder von zumindest 15 mm oder von zumindest 20 mm oder von zumindest 30 mm oder von zumindest 40 mm.

In einer beispielhaften Ausführungsform bildet der zweite expandierbare Klebstoff ein durchgehendes Element zwischen der ersten Fügestelle und der zweiten Fügestelle.

In einer beispielhaften Ausführungsform bildet der zweite expandierbare Klebstoff ein einziges zusammenhängendes Element. In einer alternativen Ausführungsform bilden mehrere nicht zusammenhängende zweite expandierbare Klebstoffe mehrere nicht zusammenhängende Elemente.

In einer beispielhaften Ausführungsform ist der zweite expandierbare Klebstoff ein pumpbares oder extrudierbares Material.

In einer beispielhaften Ausführungsform ist der zweite expandierbare Klebstoff pumpbar bei einer Temperatur von weniger als 80°C, bevorzugt von weniger als 70°C, bevorzugt von wengier als 60°C, besonders bevorzugt von weniger als 50°C.

In einer beispielhaften Ausführungsform ist der zweite expandierbare Klebstoff extrudierbar bei einer Temperatur von weniger als 100°C, bevorzugt von weniger als 90°C, bevorzugt von wengier als 80°C, besonders bevorzugt von weniger als 70°C.

In einer beispielhaften Ausführungsform ist der zweite expandierbare Klebstoff pumpbar oder extrudierbar bei einer Temperatur, welche um zumindest 20 K oder um zumindest 30 K oder um zumindest 40 K oder um zumindest 50 K oder um zumindest 60 K unter einer Aktivierungstemperatur des zweiten expandierbare Klebstoffes liegt.

Die eingangs gestellte Aufgabe wird zudem gelöst durch ein Verfahren zur Dämmung eines Strukturelementes in einem Kraftfahrzeug, das Verfahren umfassend die Schritte: Bereitstellen einer Vorrichtung mit einem Träger und einem ersten expandierbaren Klebstoff; Anordnen der Vorrichtung an einem ersten Bestandteil des Strukturelementes; Anordnen eines zweiten expandierbaren Klebstoffes auf einem zweiten Bestandteil des Strukturelementes; Fügen des ersten Bestandteils und des zweiten Bestandteils des Strukturelementes zur Bildung des Strukturelementes, wobei die Vorrichtung und der zweite expandierbare Klebstoff in einem Hohlraum zwischen den Bestandteilen des Strukturelementes angeordnet sind; und Expandieren des ersten expandierbaren Klebstoffes und des zweiten expandierbaren Klebstoffes, wodurch ein Querschnitt des Strukturelementes von der Vorrichtung und dem zweiten expandierbaren Klebstoff im Wesentlichen vollständig ausgefüllt wird.

In einer beispielhaften Ausführungsform wird das Verfahren mit einem System gemäss obiger Beschreibung durchgeführt.

In einer beispielhaften Ausführungsform wird der zweite expandierbare Klebstoff durch einen Roboter auf dem zweiten Bestandteil des Strukturelementes angeordnet.

In einer beispielhaften Ausführungsform wird der zweite expandierbare Klebstoff auf den zweiten Bestandteil des Strukturelementes gepumpt oder extrudiert.

In einer beispielhaften Ausführungsform wird die Anordnung des zweiten Klebstoffes auf dem zweiten Bestandteil des Strukturelementes vor oder nach dem Anordnen der Vorrichtung an dem ersten Bestandteil des Strukturelementes durchgeführt.

In einer beispielhaften Ausführungsform wird beim Expandieren eine Temperatur von zumindest 100°C oder zumindest 120°C oder zumindest 140°C zur Aktivierung der Klebstoffe angewendet.

In einer beispielhaften Ausführungsform wird beim Aktivieren des ersten expandierbaren Klebstoffes und des zweiten expandierbaren Klebstoffes Wärme eingesetzt, insbesondere wird die Aktivierung der Klebstoffe in einem Lackierofen durchgeführt.

Einzelheiten und Vorteile der Erfindung werden im Folgenden anhand von Ausführungsbeispielen und mit Bezug auf schematische Zeichnungen beschrieben.

Es zeigen:
- Fig. 1: eine beispielhafte Darstellung einer Karosserie gemäss Stand der Technik;
- Fig. 2a und 2b: schematische Darstellung einer beispielhaften Vorrichtung gemäss Stand der Technik;
- Fig. 3a bis 3f: schematische Darstellung von beispielhaften Vorrichtungen; und
- Fig. 4a und 4b: schematische Darstellung eines beispielhaften Systems zur Dämmung eines Strukturelementes.

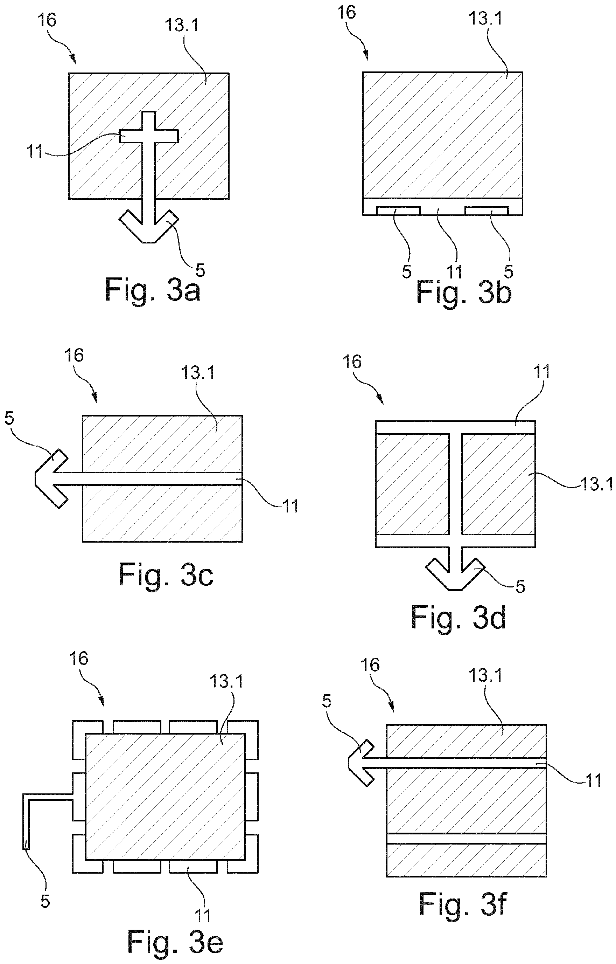

In den Fig. 3a bis 3f sind verschiedene Ausführungsbeispiele von Vorrichtungen 16 dargestellt. In diesen Ausführungsbeispielen hat die Vorrichtung 16 neben dem ersten expandierbaren Material 13.1 jeweils einen Träger 11. Die Vorrichtung 16 bzw. der erste expandierbare Klebstoff 13.1 ist dabei jeweils in einem nicht expandierten Zustand dargestellt.

In diesen Ausführungsbeispielen hat die Vorrichtung 16 jeweils eine kompakte Form und ist im Wesentlichen quaderförmig ausgebildet.

Zur Anordnung der Vorrichtung 16 an einem Strukturelement hat die Vorrichtung 16 jeweils zumindest ein Befestigungselement 5. Dieses Befestigungselement 5 kann dabei unterschiedlich ausgestaltet sein, beispielsweise als Clip, als Schweisslasche, als magnetisches Element oder als Klebstoff.

In Fig. 3a ist der Träger 11 mit einem kreuzartigen Querschnitt ausgebildet, welcher im ersten expandierbaren Klebstoff 13.1 verankert ist. An diesem kreuzartigen Träger 11 ist das Befestigungselement 5 in der Form eines Clips angeformt.

In Fig. 3b ist die Vorrichtung 16 ebenfalls mit einem Träger 11 und einem darauf angeordneten ersten expandieren Klebstoff 13.1 ausgebildet. In diesem Ausführungsbeispiel hat die Vorrichtung 16 zwei Befestigungselemente 5, welche beide als magnetische Materialien im Träger 11 integriert sind.

In Fig. 3c ist ein weiteres Ausführungsbeispiel einer Vorrichtung 16 dargestellt. In diesem Ausführungsbeispiel ist der Träger 11 mittig im ersten expandierbaren Klebstoff 13.1 angeordnet, und ein Befestigungselement 5 ist in der Form eines Clips an den Träger 11 angeformt.

In Fig. 3d ist eine weitere beispielhafte Vorrichtung 16 dargestellt. In diesem Ausführungsbeispiel hat der Träger 11 eine erste Platte und eine zweite Platte. Der erste expandierbare Klebstoff 13.1 ist dabei zwischen diesen Platten des Trägers 11 angeordnet. Weiterhin ist das Befestigungselement 5 wiederum in der Form eines Clips am Träger 11 angeformt.

In Fig. 3e ist eine weitere beispielhafte Vorrichtung 16 dargestellt. In diesem Ausführungsbeispiel ist der erste expandierbare Klebstoff 13.1 im Wesentlichen vom Träger 11 umschlossen. Dabei hat der Träger 11 Öffnungen, durch welche der erste expandierbare Klebstoff 13.1 bei einer Expansion hindurch expandieren kann. Zudem ist am Träger 11 ein Befestigungselement 5 in der Form einer Schweisslasche angeformt.

In Fig. 3f ist eine weitere beispielhafte Vorrichtung 16 dargestellt. In diesem Ausführungsbeispiel hat die Vorrichtung 16 wiederum einen ersten expandierbaren Klebstoff 13.1 und einen Träger 11. Der Träger 11 umfasst in diesem Ausführungsbeispiel eine erste Platte und eine zweite Platte. Dabei ist an der ersten Platte das Befestigungselement 5 in der Form eines Clips angeformt.

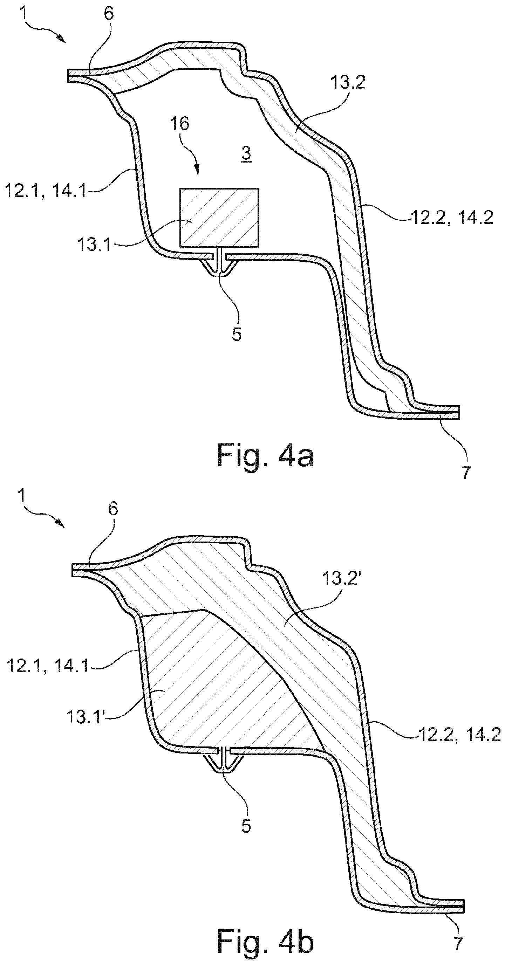

In den Fig. 4a und 4b ist eine beispielhafte und schematisch dargestellte Ausführungsform eines Systems 1 zur Dämmung eines Strukturelementes 12, 14 abgebildet. Dabei sind der erste expandierbare Klebstoff 13.1 und der zweite expandierbare Klebstoff 13.2 in Fig. 4a in einem nicht expandierten Zustand, und in Fig. 4b in einem expandierten Zustand.

Das System 1 umfasst ein Strukturelement 12, 14 mit einem ersten Bestandteil 12.1, 14.1 und einem zweiten Bestandteil 12.2, 14.2. Die Bestandteile 12.1, 14.1, 12.2, 14.2 des Strukturelementes 12, 14 sind dabei an einer ersten Fügestelle 6 und an einer zweiten Fügestelle 7 zusammengefügt, wodurch ein Hohlraum 3 gebildet wird.

In diesem Ausführungsbeispiel ist ersichtlich, dass die Vorrichtung 16 derart im Hohlraum 3 des Strukturelementes 12, 14 angeordnet ist, dass der erste expandierbare Klebstoff 13.1 einen Hauptbereich des Hohlraums 3 ausfüllen kann. Der zweite expandierbare Klebstoff 13.2 ist dabei derart auf dem zweiten Bestandteil 12.2, 14.2 des Strukturelementes 12, 14 angeordnet, dass insbesondere die Bereiche der Fügestellen 6, 7 im Wesentlichen vollständig ausgefüllt werden können.

In Fig. 4a ist zudem ersichtlich, dass der zweite expandierbare Klebstoff 13.2 in einem nicht expandierten Zustand im Bereich der Fügestellen 6, 7 in Kontakt ist mit dem Strukturelement 12, 14. Dies dient insbesondere dazu, die schwer zugänglichen Bereiche der Fügestellen 6, 7 im Wesentlichen vollständig ausfüllen zu können.

In diesem Ausführungsbeispiel wird der zweite expandierbare Klebstoff 13.2 auch insbesondere dazu verwendet, einen schwer zugänglichen Bereich des Hohlraums 3, welcher sich zur zweiten Fügestelle 7 hin erstreckt, im Wesentlichen vollständig auszufüllen.

### Bezugszeichenliste

- 1: System
- 3: Hohlraum
- 5: Befestigungselement
- 6: erste Fügestelle
- 7: zweite Fügestelle
- 10: Karosserie
- 11: Träger
- 12: Strukturelement
- 12.1: erster Bestandteil
- 12.2: zweiter Bestandteil
- 13: Klebstoff
- 13.1: erster expandierbarer Klebstoff
- 13.2: zweiter expandierbarer Klebstoff
- 14: Strukturelement
- 14.1: erster Bestandteil
- 14.2: zweiter Bestandteil
- 16: Vorrichtung
- 21: Randbereich

## Patentansprüche

1. System (1) zur Dämmung eines Strukturelementes (12, 14) in einem Kraftfahrzeug, das System (1) umfassend:
ein Strukturelement (12, 14) mit einem ersten Bestandteil (12.1, 14.1) und einem zweiten Bestandteil (12.2, 14.2), wobei die Bestandteile (12.1, 12.2, 14.1, 14.2) an einer ersten Fügestelle (6) und an einer zweiten Fügestelle (7) zusammengefügt sind, und wobei das Strukturelement (12, 14) einen Hohlraum (3) bildet;
eine Vorrichtung (16) mit einem Träger (11) und einem ersten expandierbaren Klebstoff (13.1), wobei der Träger (11) durch ein Befestigungselement (5) am ersten Bestandteil (12.1, 14.1) des Strukturelementes (12, 14) angeordnet ist; und
ein zweiter expandierbarer Klebstoff (13.2), welcher auf dem zweiten Bestandteil (12.2, 14.2) des Strukturelementes (12, 14) angeordnet ist;
wobei der erste expandierbare Klebstoff (13.1) und der zweite expandierbare Klebstoff (13.2) in einem nicht expandierten Zustand sind und derart ausgebildet und angeordnet sind, dass die Vorrichtung (16) und der zweite Klebstoff (13.2) nach einer Expansion der Klebstoffe (13.1, 13.2) einen Querschnitt des Strukturelementes (12, 14) im Wesentlichen vollständig ausfüllen.

2. System nach Anspruch 1, wobei die Vorrichtung (16) eine kompakte Form hat und/oder wobei die Vorrichtung (16) im Wesentlichen quaderförmig oder zylindrisch oder stumpfkegelförmig oder kegelförmig oder rotationskegelförmig ist.

3. System nach einem der Ansprüche 1 oder 2, wobei der Träger (11) und der erste expandierbare Klebstoff (13.1) auf einer gesamten Grundfläche der Vorrichtung (16) zusammen eine Dicke von zumindest 3 mm haben.

4. System nach einem der vorhergehenden Ansprüche, wobei der erste expandierbare Klebstoff (13.1) eine Expansionsrate zwischen 1000% und 3000% hat.

5. System nach einem der vorhergehenden Ansprüche, wobei die Vorrichtung (16) durch ein Spritzgussverfahren hergestellt ist.

6. System nach einem der vorhergehenden Ansprüche, wobei der zweite expandierbare Klebstoff (13.2) ein pumpbares oder extrudierbares Material ist.

7. System nach einem der vorhergehenden Ansprüche, wobei der zweite expandierbare Klebstoff (13.2) eine Expansionsrate von zumindest 200% hat.

8. System nach einem der vorhergehenden Ansprüche, wobei der zweite expandierbare Klebstoff (13.2) in Form einer Raupe oder mehrerer Raupen auf dem zweiten Bestandteil (12.2, 14.2) angeordnet ist.

9. System nach Anspruch 8, wobei die zumindest eine Raupe einen Durchmesser von 2 bis 20 mm hat und/oder wobei die zumindest eine Raupe eine Länge von zumindest 10 mm hat.

10. System nach einem der vorhergehenden Ansprüche, wobei der zweite expandierbare Klebstoff (13.2) an der ersten Fügestelle (6) und an der zweiten Fügestelle (7) mit dem Strukturelement (12, 14) in Kontakt ist.

11. System nach einem der vorhergehenden Ansprüche, wobei der zweite expandierbare Klebstoff (13.2) jeweils ausgehend von den Fügestellen (6, 7) eine Ausdehnung entlang des zweiten Bestandteils (12.2, 14.2) des Strukturelementes (12, 14) von zumindest 10 mm hat.

12. System nach einem der vorhergehenden Ansprüche, wobei der zweite expandierbare Klebstoff (13.2) ein durchgehendes Element zwischen den Fügestellen (6, 7) bildet.

13. Verfahren zur Dämmung eines Strukturelementes (12, 14) in einem Kraftfahrzeug, das Verfahren umfassend die Schritte:
Bereitstellen einer Vorrichtung (16) mit einem Träger (11) und einem ersten expandierbaren Klebstoff (13.1);
Anordnen der Vorrichtung (16) an einem ersten Bestandteil (12.1, 14.1) des Strukturelementes (12, 14);
Anordnen eines zweiten expandierbaren Klebstoffes (13.2) auf einem zweiten Bestandteil (12.2, 14.2) des Strukturelementes (12, 14);
Fügen des ersten Bestandteils (12.1, 14.1) und des zweiten Bestandteils (12.2, 14.2) des Strukturelementes (12, 14) zur Bildung des Strukturelementes (12, 14), wobei die Vorrichtung (16) und der zweite expandierbare Klebstoff (13.2) in einem Hohlraum (3) zwischen den Bestandteilen (12.1, 12.2, 14.1, 14.2) des Strukturelementes (12, 14) angeordnet sind; und
Expandieren des ersten expandierbaren Klebstoffes (13.1) und des zweiten expandierbaren Klebstoffes (13.2), wodurch ein Querschnitt des Strukturelementes (12, 14) von der Vorrichtung (16) und dem zweiten expandierbaren Klebstoff (13.2) im Wesentlichen vollständig ausgefüllt wird.

14. Verfahren nach Anspruch 13, wobei der zweite expandierbare Klebstoff (13.2) auf den zweiten Bestandteil (12.2, 14.2) des Strukturelementes (12, 14) gepumpt oder extrudiert wird.

15. Verfahren nach Anspruch 13 oder Anspruch 14, wobei das Verfahren mit einem System (1) nach einem der Ansprüche 1 bis 13 durchgeführt wird.

## Claims

1. A system (1) for insulating a structural element (12, 14) in a motor vehicle, the system (1) comprising:
a structural element (12, 14) having a first constituent part (12.1, 14.1) and a second constituent part (12.2, 14.2), wherein the constituent parts (12.1, 12.2, 14.1, 14.2) are joined together at a first joining point (6) and at a second joining point (7), and wherein the structural element (12, 14) forms a cavity (3);
a device (16) having a carrier (11) and a first expandable adhesive (13.1), wherein the carrier (11) is arranged on the first constituent part (12.1, 14.1) of the structural element (12, 14) by way of a fastening element (5); and
a second expandable adhesive (13.2) which is arranged on the second constituent part (12.2, 14.2) of the structural element (12, 14);
wherein the first expandable adhesive (13.1) and the second expandable adhesive (13.2) are in a non-expanded state and are configured, and arranged, in such a way that, after the adhesives (13.1, 13.2) have been expanded, the device (16) and the second adhesive (13.2) substantially completely fill a cross section of the structural element (12, 14).

2. The system as claimed in claim 1, wherein the device (16) has a compact form and/or wherein the device (16) has substantially the form of a cuboid or cylinder or truncated cone or cone or cone of revolution.

3. The system as claimed in either of claims 1 and 2, wherein the carrier (11) and the first expandable adhesive (13.1) together have a thickness of at least 3 mm on a total base area of the device (16).

4. The system as claimed in one of the preceding claims, wherein the first expandable adhesive (13.1) has an expansion rate of between 1000% and 3000%.

5. The system as claimed in one of the preceding claims, wherein the device (16) is produced by an injection-molding process.

6. The system as claimed in one of the preceding claims, wherein the second expandable adhesive (13.2) is a pumpable or extrudable material.

7. The system as claimed in one of the preceding claims, wherein the second expandable adhesive (13.2) has an expansion rate of at least 200%.

8. The system as claimed in one of the preceding claims, wherein the second expandable adhesive (13.2) is arranged in the form of a bead or a plurality of beads on the second constituent part (12.2, 14.2).

9. The system as claimed in claim 8, wherein the at least one bead has a diameter of 2 to 20 mm and/or wherein the at least one bead has a length of at least 10 mm.

10. The system as claimed in one of the preceding claims, wherein the second expandable adhesive (13.2) contacts the structural element (12, 14) at the first joining point (6) and at the second joining point (7).

11. The system as claimed in one of the preceding claims, wherein the second expandable adhesive (13.2) has, in each case proceeding from the joining points (6, 7), an extent along the second constituent part (12.2, 14.2) of the structural element (12, 14) of at least 10 mm.

12. The system as claimed in one of the preceding claims, wherein the second expandable adhesive (13.2) forms a continuous element between the joining points (6, 7).

13. A method for insulating a structural element (12, 14) in a motor vehicle, the method comprising the steps of:
providing a device (16) having a carrier (11) and a first expandable adhesive (13.1);
arranging the device (16) on a first constituent part (12.1, 14.1) of the structural element (12, 14);
arranging a second expandable adhesive (13.2) on a second constituent part (12.2, 14.2) of the structural element (12, 14);
joining the first constituent part (12.1, 14.1) and the second constituent part (12.2, 14.2) of the structural element (12, 14) in order to form the structural element (12, 14), wherein the device (16) and the second expandable adhesive (13.2) are arranged in a cavity (3) between the constituent parts (12.1, 12.2, 14.1, 14.2) of the structural element (12, 14); and
expanding the first expandable adhesive (13.1) and the second expandable adhesive (13.2), as a result of which a cross section of the structural element (12, 14) is substantially completely filled by the device (16) and the second expandable adhesive (13.2).

14. The method as claimed in claim 13, wherein the second expandable adhesive (13.2) is pumped or extruded onto the second constituent part (12.2, 14.2) of the structural element (12, 14).

15. The method as claimed in claim 13 or claim 14, wherein the method is carried out using a system (1) as claimed in one of claims 1 to 13.

## Revendications

1. Système (1) pour l'isolation d'un élément structurel (12, 14) dans un véhicule automobile, le système (1) comprenant :
un élément structurel (12, 14) comprenant un premier composant (12.1, 14.1) et un deuxième composant (12.2, 14.2), les composants (12.1, 12.2, 14.1, 14.2) étant assemblés au niveau d'un premier emplacement de jonction (6) et au niveau d'un deuxième emplacement de jonction (7), et l'élément structurel (12, 14) formant une cavité (3) ;
un dispositif (16) comprenant un support (11) et un premier adhésif expansible (13.1), le support (11) étant agencé par un élément de fixation (5) sur le premier composant (12.1, 14.1) de l'élément structurel (12, 14) ; et
un deuxième adhésif expansible (13.2), qui est agencé sur le deuxième composant (12.2, 14.2) de l'élément structurel (12, 14) ;
dans lequel le premier adhésif expansible (13.1) et le deuxième adhésif expansible (13.2) sont dans un état non expansé et sont configurés et agencés de telle sorte que le dispositif (16) et le deuxième adhésif (13.2), après une expansion des adhésifs (13.1, 13.2), remplissent essentiellement entièrement une section transversale de l'élément structurel (12, 14).

2. Système selon la revendication 1, dans lequel le dispositif (16) a une forme compacte et/ou dans lequel le dispositif (16) est essentiellement de forme parallélépipédique ou cylindrique ou de forme tronconique ou de forme conique ou en forme de cône de révolution.

3. Système selon l'une quelconque des revendications 1 ou 2, dans lequel le support (11) et le premier adhésif expansible (13.1) ont ensemble une épaisseur d'au moins 3 mm sur une surface de base totale du dispositif (16).

4. Système selon l'une quelconque des revendications précédentes, dans lequel le premier adhésif expansible (13.1) a un taux d'expansion compris entre 1 000 % et 3 000 %.

5. Système selon l'une quelconque des revendications précédentes, dans lequel le dispositif (16) est fabriqué par un procédé de moulage par injection.

6. Système selon l'une quelconque des revendications précédentes, dans lequel le deuxième adhésif expansible (13.2) est un matériau pompable ou extrudable.

7. Système selon l'une quelconque des revendications précédentes, dans lequel le deuxième adhésif expansible (13.2) a un taux d'expansion d'au moins 200 %.

8. Système selon l'une quelconque des revendications précédentes, dans lequel le deuxième adhésif expansible (13.2) est agencé sous la forme d'une chenille ou de plusieurs chenilles sur le deuxième composant (12.2, 14.2) .

9. Système selon la revendication 8, dans lequel l'au moins une chenille a un diamètre de 2 à 20 mm et/ou dans lequel l'au moins une chenille a une longueur d'au moins 10 mm.

10. Système selon l'une quelconque des revendications précédentes, dans lequel le deuxième adhésif expansible (13.2) est en contact avec l'élément structurel (12, 14) au niveau du premier emplacement de jonction (6) et au niveau du deuxième emplacement de jonction (7).

11. Système selon l'une quelconque des revendications précédentes, dans lequel le deuxième adhésif expansible (13.2) a une extension d'au moins 10 mm le long du deuxième composant (12.2, 14.2) de l'élément structurel (12, 14) à partir de chacun des emplacements de jonction (6, 7).

12. Système selon l'une quelconque des revendications précédentes, dans lequel le deuxième adhésif expansible (13.2) forme un élément continu entre les emplacements de jonction (6, 7).

13. Procédé d'isolation d'un élément structurel (12, 14) dans un véhicule automobile, le procédé comprenant les étapes suivantes :
la fourniture d'un dispositif (16) comprenant un support (11) et un premier adhésif expansible (13.1) ;
l'agencement du dispositif (16) sur un premier composant (12.1, 14.1) de l'élément structurel (12, 14) ;
l'agencement d'un deuxième adhésif expansible (13.2) sur un deuxième composant (12.2, 14.2) de l'élément structurel (12, 14) ;
la jonction du premier composant (12.1, 14.1) et du deuxième composant (12.2, 14.2) de l'élément structurel (12, 14) pour former l'élément structurel (12, 14), le dispositif (16) et le deuxième adhésif expansible (13.2) étant agencés dans une cavité (3) entre les composants (12.1, 12.2, 14.1, 14.2) de l'élément structurel (12, 14) ; et
l'expansion du premier adhésif expansible (13.1) et du deuxième adhésif expansible (13.2), de telle sorte qu'une section transversale de l'élément structurel (12, 14) est essentiellement entièrement remplie par le dispositif (16) et le deuxième adhésif expansible (13.2).

14. Procédé selon la revendication 13, dans lequel le deuxième adhésif expansible (13.2) est pompé ou extrudé sur le deuxième composant (12.2, 14.2) de l'élément structurel (12, 14).

15. Procédé selon la revendication 13 ou la revendication 14, dans lequel le procédé est réalisé avec un système (1) selon l'une quelconque des revendications 1 à 13.
